# EUROPÄISCHE PATENTSCHRIFT

(11) **EP 3 175 961 B1**
(45) Veröffentlichungstag und Bekanntmachung des Hinweises auf die Patenterteilung: **14.08.2019**
(21) Anmeldenummer: 16002553.2
(22) Anmeldetag: 01.12.2016
(51) Int. Cl.: B27G 19/10, B23Q 3/00, B27C 5/06, B27C 1/08, B27C 1/12, F16B 2/14, F16B 43/02

(54) **ANDRUCKVORRICHTUNG FÜR EINE WERKZEUGMASCHINE ZUR BEARBEITUNG VON WERKSTÜCKEN AUS HOLZ, KUNSTSTOFF UND DERGLEICHEN SOWIE EINE WERKZEUGMASCHINE MIT WENIGSTENS EINER ANDRUCKVORRICHTUNG**
PRESSING DEVICE FOR A MACHINE TOOL FOR MACHINING WORKPIECES MADE OF WOOD, PLASTIC AND THE LIKE, AS WELL AS A MACHINE TOOL WITH AT LEAST ONE PRESSURE MEMBER
DISPOSITIF DE COMPRESSION POUR UNE MACHINE-OUTIL SERVANT À L'USINAGE DE PIÈCES EN BOIS, EN MATIÈRE PLASTIQUE ET SIMILAIRE ET MACHINE-OUTIL COMPRENANT AU MOINS UN DISPOSITIF DE COMPRESSION

(30) Priorität: 04.12.2015 DE 102015016221
(43) Veröffentlichungstag der Anmeldung: 07.06.2017
(73) Patentinhaber: Michael Weinig Ag, 97941 Tauberbischofsheim (DE)
(72) Erfinder: Gramlich, Rainer, 74747 Ravenstein-Oberwittstadt (DE); Rapp, Walter, 97953 Königheim-Gissigheim (DE); Wagner, Ralf, 74736 Hardheim (DE)
(74) Vertreter: Kohl, Karl-Heinz

(56) Entgegenhaltungen:
- EP-A1- 0 654 333
- EP-A2- 0 924 037
- EP-A2- 1 127 665
- DE-C1- 4 305 356
- US-A1- 2012 082 528

## Beschreibung

Die Erfindung betrifft eine Andruckvorrichtung für eine Werkzeugmaschine zur Bearbeitung von Werkstücken aus Holz, Kunststoff und dergleichen nach dem Oberbegriff des Anspruches 1 sowie eine Werkzeugmaschine nach Anspruch 13.

Eine solche Andruckvorrichtung ist aus DE 43 05 356 C1 bekannt. Andruckvorrichtungen werden bei Werkzeugmaschinen, insbesondere bei Kehlmaschinen, eingesetzt, um die Werkstücke während der Bearbeitung durch entsprechende Werkzeuge der Maschine gegen die Transportbahn zu belasten, so dass eine exakte Bearbeitung der Werkstücke möglich ist. Bei einer Kehlmaschine befindet sich die Andruckvorrichtung im Bereich einer mit Abstand über der Transportbahn für die Werkstücke befindlichen oberen horizontalen Spindel, auf der ein Werkzeug sitzt, mit dem die Oberseite des Werkstückes beim Durchlauf durch die Kehlmaschine bearbeitet wird. Das Andruckelement muss auf den Flugkreisdurchmesser des jeweils eingesetzten Werkzeuges eingestellt werden. Hierzu ist es erforderlich, das Andruckelement zusammen mit der oberen Spindel in eine obere Position zu verfahren, damit eine Befestigungsschraube an der Unterseite des Andruckelementes gelöst werden kann, um das Andruckelement gegenüber seinem Träger verstellen zu können. Dies ist nur in Rasterschritten möglich, weil das Andruckelement und der Träger mit einer entsprechenden Verzahnung versehen sind, die dem Formschluss dient, damit das Andruckelement beim Betrieb der Werkzeugmaschine nicht in das Werkzeug geschoben werden kann. Da die Befestigungsschraube schlecht zugänglich ist und der Abstand zum Werkzeugflugkreis nur in den vorgegebenen Rasterschritten eingestellt werden kann, ist eine optimale Einstellung des Andruckelementes nicht möglich.

Der Erfindung liegt die Aufgabe zugrunde, die Andruckvorrichtung und die Werkzeugmaschine so auszubilden, dass das Andruckelement in einfacher Weise sehr genau in die gewünschte Position eingestellt werden kann.

Diese Aufgabe wird bei der Andruckvorrichtung und der Werkzeugmaschine erfindungsgemäß mit den Merkmalen des Anspruches 1 gelöst.

Bei der erfindungsgemäßen Andruckvorrichtung lässt sich das Andruckelement sehr einfach und genau in die erforderliche Position verstellen. Das Andruckelement ist über die Keilklemmeinrichtung am Träger klemmbar. Die Keilklemmeinrichtung erlaubt eine einfache und stufenlose Einstellung des Andruckelementes, das auf diese Weise sehr genau an den Flugkreisdurchmesser des jeweiligen Werkzeuges angepasst werden kann. Das am Keildruckstück angreifende Stellelement kann so vorgesehen sein, dass es vom Bediener der Andruckvorrichtung einfach betätigt werden kann. Vorteilhaft ist das Stellelement so vorgesehen, dass es von der Einlaufseite der Werkstücke aus betätigt werden kann. Der Einsatz der Keilklemmeinrichtung macht es möglich, das Andruckelement auch einfach auswechseln zu können.

Das Keildruckstück ist von einem Stehbolzen mit radialem Spiel durchsetzt.

Bevorzugt hat das Keildruckstück eine Durchgangsöffnung, deren Durchmesser größer ist als der Außendurchmesser des Stehbolzens oder die als Langloch ausgebildet ist. Dadurch wird gewährleistet, dass das Keildruckstück zuverlässig verklemmt werden kann, ohne die Position des Stehbolzens und damit des Andruckelementes beim Klemmvorgang zu beeinträchtigen. Aufgrund des radialen Spiels zwischen dem Stehbolzen und der Wandung der Durchgangsöffnung kann das Keildruckstück relativ zum Stehbolzen verschoben werden, ohne dass ein Kontakt zwischen der Wandung der Durchgangsöffnung und dem Stehbolzen zu befürchten ist.

Bei einer konstruktiv einfachen Ausbildung wird das Keildruckstück an der Gegenkeilfläche des Trägers abgestützt, wobei es vorteilhaft wiederum ein Befestigungselement belastet. Das Befestigungselement ist auf dem Stehbolzen vorgesehen und vorteilhaft eine Mutter, die auf das freie Ende des Stehbolzens geschraubt ist.

Damit eine sichere Klemmung des Andruckelementes erreicht wird, weist das Keildruckstück zwei spitzwinklig zueinander liegende Keilflächen auf. Die eine Keilfläche liegt flächig an der Gegenkeilfläche des Trägers an. Die andere Keilfläche wirkt auf das Befestigungselement.

Bei einer bevorzugten Ausführungsform greift das Stellelement an einer stirnseitigen Anlagefläche des Keildruckstückes an. Diese Anlagefläche verläuft winklig zur Keilfläche des Keildruckstückes.

Vorteilhaft ist das Stellelement eine Stellspindel, die in eine Gewindebohrung des Trägers geschraubt ist. Mit der Stellspindel lässt sich das Keildruckstück zuverlässig verklemmen.

Eine kompakte und nur wenig Einbauraum benötigende Ausbildung ergibt sich, wenn die Gegenkeilfläche der Boden einer Vertiefung des Trägers ist.

In diesem Fall kann die Keilklemmeinrichtung im Wesentlichen vollständig innerhalb der Vertiefung untergebracht werden.

Eine sichere Klemmung des Andruckelementes mittels der Keilklemmeinrichtung ergibt sich, wenn der Stehbolzen mit einem Nutenstein fest verbunden ist, der in einer Nut des Andruckelementes liegt. Der Nutenstein liegt formschlüssig in der Nut. Wird das Andruckelement in Richtung auf den Flugkreisdurchmesser des Werkzeuges verstellt, wird das Andruckelement gegenüber dem Nutenstein sowie dem Stehbolzen verschoben.

Die Nut des Andruckelementes ist vorteilhaft eine T-Nut. Dadurch ist eine sichere Formschlussverbindung zwischen dem Nutenstein und damit dem Stehbolzen sowie dem Andruckelement gewährleistet. Es kann längs des Nutensteines stufenlos verschoben werden. Sobald das Andruckelement den gewünschten Abstand zum Flugkreisdurchmesser des Werkzeuges hat, kann es mittels der Keilklemmeinrichtung am Träger verspannt werden.

Bei einer weiteren erfindungsgemäßen Ausbildung lässt sich das Andruckelement mit wenigstens einer Stellspindel stufenlos relativ zum Träger verstellen. Das Andruckelement lässt sich daher sehr genau auf den Flugkreisdurchmesser des Werkzeuges einstellen.

Die Andruckvorrichtung lässt sich in vorteilhafter Weise in vertikaler Richtung (y-Achse) verstellen.

Damit die Andruckvorrichtung in der jeweiligen y-Position gesichert werden kann, ist die Andruckvorrichtung vorteilhaft mittels wenigstens eines Klemmhebels in der jeweiligen y-Position klemmbar.

Bei einer vorteilhaften Ausführungsform spannt der Klemmhebel in der Klemmstellung über wenigstens ein Axialdrucklager die Andruckvorrichtung gegen eine Absaughaube. Dadurch ergibt sich eine große Klemmkraft im Verhältnis zur Betätigungskraft des Klemmhebels.

Das Axialdrucklager umgibt bei einer vorteilhaften Ausführung einen Stehbolzen, dessen eines Ende in der Absaughaube befestigt ist und auf dessen anderes Ende der Klemmhebel geschraubt ist.

Bei einer bevorzugten Ausführungsform ist der Träger mit mindestens einem Andruckfuß versehen, der gelenkig mit einem Andruckgehäuse verbunden ist. Die Gelenkverbindung ermöglicht, dass der Andruckfuß zusammen mit dem Träger und dem Andruckelement in eine Ausgangsposition bewegt werden kann.

Bei einer konstruktiv kostengünstigen und einfachen Ausbildung weist die Gelenkverbindung zwischen dem Andruckfuß und dem Andruckgehäuse zwei mit Abstand übereinander liegende Gelenkstücke auf, die mit dem Andruckfuß und dem Andruckgehäuse gelenkig verbunden sind. Die Gelenkachsen der beiden Gelenkstücke liegen jeweils parallel zueinander. Die beiden Gelenkstücke stellen eine problemlose Verstellung des Andruckfußes sicher, indem das Andruckelement vom Werkzeug weggeschwenkt wird, wenn das Andruckelement durch ein Übermaß des Werkstückes angehoben wird.

Bevorzugt ist die Andruckvorrichtung so ausgebildet, dass das Andruckelement unter Gewichtskraft in einer anschlagbegrenzten Ausgangposition liegt. Dadurch wird erreicht, dass das Andruckelement in einfacher Weise selbsttätig in die Ausgangsposition zurückkehrt, wenn es vom Werkstück freikommt. Aufwändige und teure Einstelleinrichtungen sind darum nicht erforderlich.

Die Anschlagbegrenzung des Andruckelementes in der Ausgangsposition kann dadurch erreicht werden, dass das eine Gelenkstück der Gelenkverbindung zwischen dem Andruckfuß und dem Andruckgehäuse mit wenigstens einem Anschlag versehen ist, der in der Ausgangsposition an einem Gegenanschlag des Andruckgehäuses anliegt. In der Ausgangsposition hat das Andruckelement den kleinsten Abstand von der Transportbahn des Werkstückes. Dieser Abstand wird so eingestellt, dass auch das dünnste zu bearbeitende Werkstück auf das Andruckelement aufläuft und es aus der Ausgangsposition anhebt. Auf diese Weise gelangt das Andruckelement selbsttätig in die Andruckposition, in der es auf dem zu bearbeitenden Werkstück aufliegt.

Bei einer vorteilhaften Ausführungsform ist der Andruckfuß an seinem vom Andruckelement abgewandten Ende mit wenigstens einem Stößel verbunden, der mit einer Kolbenstange eines Andruckzylinders zusammenwirkt. Mit dem Andruckzylinder kann eine zusätzliche Andruckkraft ausgeübt werden, um das Andruckelement zusätzlich zu seiner Gewichtskraft zu belasten. Das zu bearbeitende Werkstück wird darum sicher im Bereich des Werkzeuges gegen die Transportbahn gedrückt.

Eine konstruktiv einfache Ausbildung ergibt sich, wenn die Kolbenstange lose am Stößel anliegt. Dies hat den Vorteil, dass der Andruckfuß mit dem Stößel von der Kolbenstange abheben kann, sobald das Werkstück unter dem Andruckelement wegtransportiert ist. Dann kann das Andruckelement nach unten in die Ausgangsposition gelangen, wobei der Stößel von der Kolbenstange des Andruckzylinders abhebt.

Mit dem Stößel kann in vorteilhafter Weise ebenfalls eine Anschlagbegrenzung für das Andruckelement erreicht werden, indem der Hub des Stößels eingestellt wird. In der Ausgangsposition des Andruckelementes liegt der Stößel mittels wenigstens eines Anschlages unter Zwischenlage wenigstens eines Dämpfungselementes am Andruckgehäuse an und bildet dadurch den Anschlag für das Andruckelement in dessen Ausgangsposition. Durch die Wirkung der Dämpfungsscheibe wird, nachdem das Werkstück das Andruckelement verlassen hat, ein harter Aufschlag des Andruckelementes beim Zurückfallen in seine Ausgangsposition verhindert. Dadurch wird vermieden, dass es durch diesen Schlag zu einer Schwingungsanregung von Maschinenteilen oder des Werkstückes kommt, was die Bearbeitungsqualität negativ beeinflussen könnte.

Die erfindungsgemäße Werkzeugmaschine, die vorteilhaft eine Kehlmaschine ist, ist mit mindestens einer erfindungsgemäßen Andruckvorrichtung ausgestattet. Eine solche Werkzeugmaschine erlaubt eine qualitativ hochwertige Bearbeitung der Werkstücke, wobei die Andruckvorrichtung konstruktiv einfach und kostengünstig ausgebildet ist und dennoch eine einwandfreie Abstützung und Führung der zu bearbeitenden Werkstücke ermöglicht. Die Einstellung des Andruckelementes erfolgt sehr einfach, schnell und präzise.

Das Andruckelement ist in Transportrichtung des Werkstückes vor der horizontalen Spindel angeordnet, die sich mit Abstand oberhalb der Transportbahn der Werkzeugmaschine für die Werkstücke befindet.

Das Andruckelement liegt bei einer vorteilhaften Ausführungsform in der Ausgangsposition im Transportweg der Werkstücke durch die Werkzeugmaschine. Dabei befindet sich das Andruckelement in der Ausgangsposition in einer solchen Lage, dass es durch das durch die Werkzeugmaschine durchlaufende Werkstück angehoben wird, so dass das Andruckelement anschließend auf der Oberseite des Werkstückes zumindest unter seiner Gewichtskraft aufliegt.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Ansicht eine erfindungsgemäße Andruckeinrichtung,
- Fig. 2: eine Ansicht der Andruckvorrichtung in Richtung des Pfeiles II in Fig. 1,
- Fig. 3: in vergrößerter Darstellung einen Schnitt längs der Linie III-III in Fig. 2,
- Fig. 4: in vergrößerter Darstellung einen Schnitt längs der Linie IV-IV in Fig. 2,
- Fig. 5: in vergrößerter Darstellung und im Schnitt analog Fig. 3 ein Andruckelement mit zugehöriger Verstelleinrichtung,
- Fig. 6: in vergrößerter Darstellung einen Schnitt längs der Linie VI-VI in Fig. 2.

Die Andruckvorrichtung ist Teil einer Kehlmaschine, mit der Werkstücke an ihren Seiten im Durchlaufverfahren bearbeitet werden können. In der Regel haben die Werkstücke, die vorzugsweise aus Holz bestehen, rechteckigen Querschnitt. Beim Durchlauf dieser Werkstücke durch die Kehlmaschine werden die vier Außenseiten des Werkstückes durch entsprechende Werkzeuge bearbeitet. In Durchlaufrichtung hintereinander hat die Kehlmaschine eine untere Spindel, eine rechte Spindel, eine linke Spindel sowie eine obere Spindel. Die Spindeln liegen jeweils in Durchlaufrichtung mit Abstand hintereinander und tragen die entsprechenden Bearbeitungswerkzeuge. Während des Durchlaufes durch die Kehlmaschine werden die Werkstücke längs ihrer einen Längsseite, vorzugsweise der rechten Längsseite, an einem Anschlaglineal geführt. Es ist im Arbeitsbereich des auf der rechten Spindel sitzenden Werkzeuges unterbrochen, so dass mit diesem Werkzeug die rechte Längsseite des Werkstückes beim Durchlauf bearbeitet werden kann.

Die rechte und die linke Spindel sind vertikale Spindeln, während die untere und die obere Spindel horizontale Spindeln sind. Je nach Ausbildung der Kehlmaschine können weitere Spindeln vorgesehen sein, beispielsweise zwei obere Spindeln und/oder zwei rechte und/oder zwei linke Spindeln.

Die Andruckvorrichtung ist im Bereich einer oberen horizontalen Spindel 1 vorgesehen, auf der drehfest ein Werkzeug 2 sitzt, mit dem die Oberseite des durch die Kehlmaschine durchlaufenden Werkstückes 3 bearbeitet wird. Das Werkzeug 2 kann ein Hobelwerkzeug sein, mit dem die Oberseite des Werkstückes 3 glattgehobelt wird. Die obere Spindel 1 ist zusammen mit der Andruckvorrichtung zur Anpassung an die gewünschte Bearbeitungshöhe in vertikaler Richtung verstellbar.

Damit eine saubere und qualitativ hochwertige Oberflächenbearbeitung des Werkstückes 3 durch das Werkzeug 2 stattfinden kann, wird das Werkstück 3 in Durchlaufrichtung vor und hinter dem Werkzeug 2 durch eine Andruckvorrichtung 80, 81 mit wenigstens jeweils einem Andruckelement 4, 5 gegen eine Transportbahn 6 der Kehlmaschine gedrückt, auf der die Werkstücke 3 bei ihrem Durchlauf durch die Kehlmaschine aufliegen. Dadurch werden die Werkstücke 3 bei ihrem Durchlauf sauber, genau, ruhig und schwingungsfrei geführt und gehalten. Der Transport der Werkstücke 3 erfolgt über nicht dargestellte Vorschub- bzw. Transportwalzen, die an der Oberseite der Werkstücke 3 angreifen und diese zur Bearbeitung durch die Maschine fördern.

Die Andruckelemente 4, 5 müssen in Bezug auf den Flugkreisdurchmesser sowie die Kehltiefe des Werkzeuges 2 eingestellt werden.

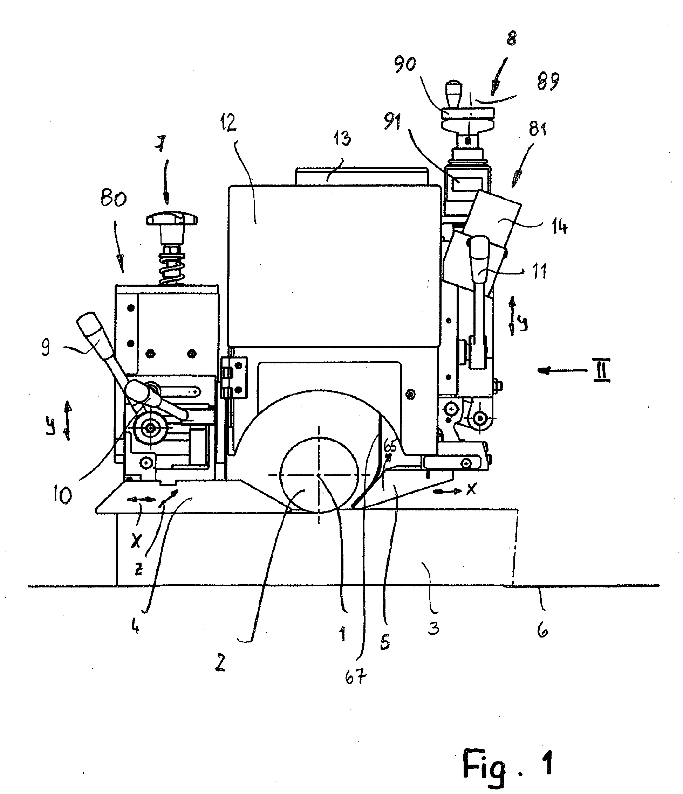

Wie aus Fig. 1 hervorgeht, hat das Andruckelement 5 in Durchlaufrichtung vor dem Werkzeug 2 einen größeren Abstand von der Transportbahn 6 als das in Durchlaufrichtung hinter dem Werkzeug 2 befindliche Andruckelement 4, weil das Werkzeug 2 an der Oberseite des Werkstückes 3 Material abgenommen hat.

Das in Durchlaufrichtung hinter dem Werkzeug 2 angeordnete Andruckelement 4 ist in x-Richtung (entspricht Transportrichtung) sowie senkrecht hierzu in z-Richtung einstellbar. Die z-Richtung liegt parallel zur Achse der Spindel 1.

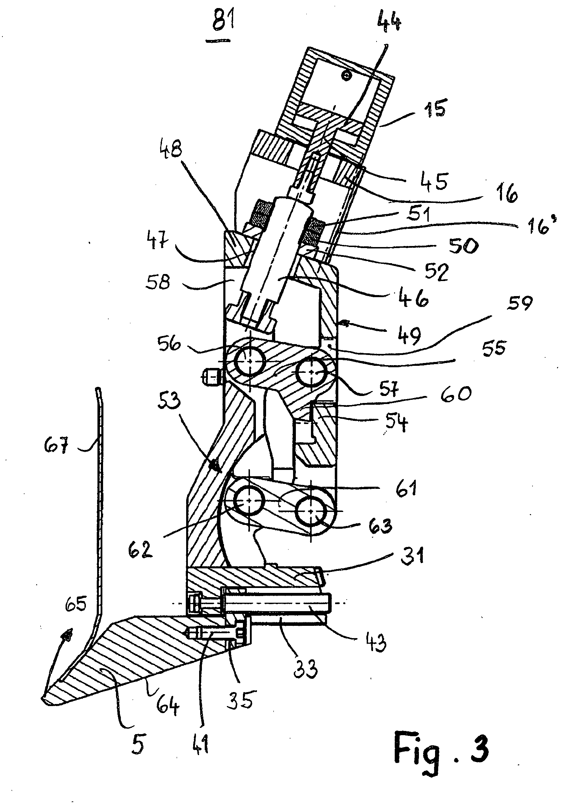

Das in Transportrichtung vor dem Werkzeug 2 angeordnete Andruckelement 5 kann ebenfalls in x-Richtung, also in Transportrichtung des Werkstückes 3, verstellt werden. Außerdem kann das Andruckelement 5 in noch zu beschreibender Weise aufwärts vom Werkzeug 2 weggeschwenkt werden, was in Fig. 1 durch einen Pfeil 65 angedeutet ist (siehe auch Fig. 3). Diese Verschwenkmöglichkeit des Andruckelementes erlaubt es, Rohholzübermaße ausgleichen zu können.

Die beiden Andruckelemente 4, 5 können als Bestandteil der Andruckvorrichtungen 80, 81 mit jeweils einer Verstelleinrichtung 7, 8 in Höhenrichtung (y-Richtung) verstellt werden, um die Andruckelemente 4,5 auf unterschiedliche Flugkreisdurchmesser des Werkzeuges 2 einstellen zu können.

Die Andruckvorrichtung 80 hat zwei Klemmhebel 9, 10. Mit dem Klemmhebel 9 erfolgt die Klemmung des Andruckelementes 4 gegen Verschieben in x-Richtung und mit dem Klemmhebel 10 gegen Verschieben in z-Richtung. Die Andruckvorrichtung 81 hat einen Klemmhebel 11, mit dem das Andruckelement 5 gegen Verschieben in y-Richtung gesichert werden kann.

Die Spindel 1 mit dem Werkzeug 2 befindet sich unterhalb einer Absaughaube 12, über die bei der Bearbeitung des Werkstückes 3 mit dem Werkzeug 2 anfallende Späne und dergleichen abgesaugt werden. Die Absaughaube 12 ist an der Oberseite mit einem Absaugstutzen 13 versehen, an den eine Absaugleitung angeschlossen wird.

Die gesamte Absaughaube 12 ist an einem (nicht dargestellten) Träger für die obere Spindel 1, dem sogenannten Spindelschieber, angeordnet und wird in y-Richtung zusammen mit der oberen Spindel 1 zur Einstellung auf unterschiedliche Werkstückdicken verstellt. Die beiden Andruckvorrichtungen 80, 81 sind an einander gegenüberliegenden Seiten der Absaughaube 12 vorgesehen und entweder direkt an der Absaughaube 12 oder am Spindelschieber befestigt und werden ebenfalls bei dieser Höhenverstellung der oberen Spindel 1 mitgenommen. Mittels der Verstelleinrichtungen 7, 8 lassen sich die Andruckelemente 4, 5 relativ zur Absaughaube 12 und des Werkzeuges 2 in y-Richtung einstellen.

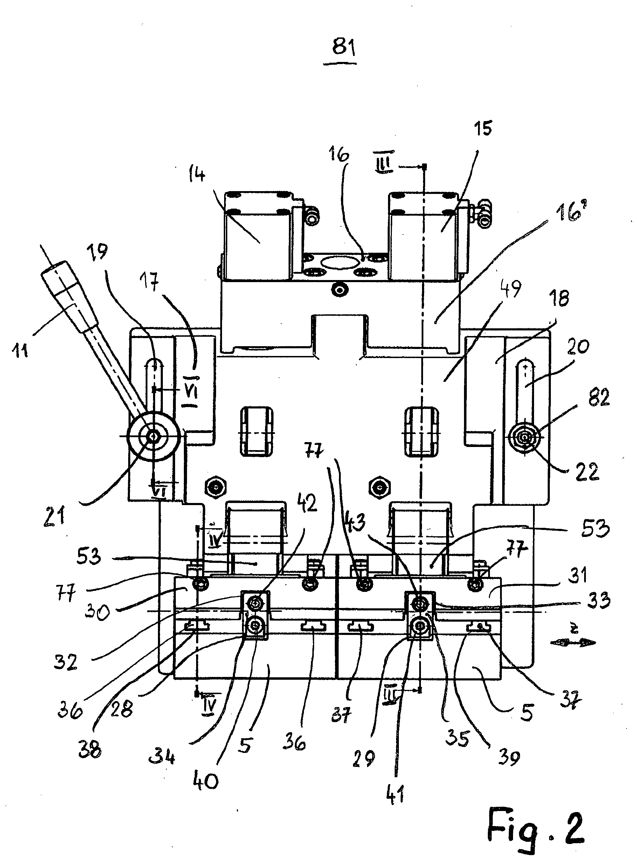

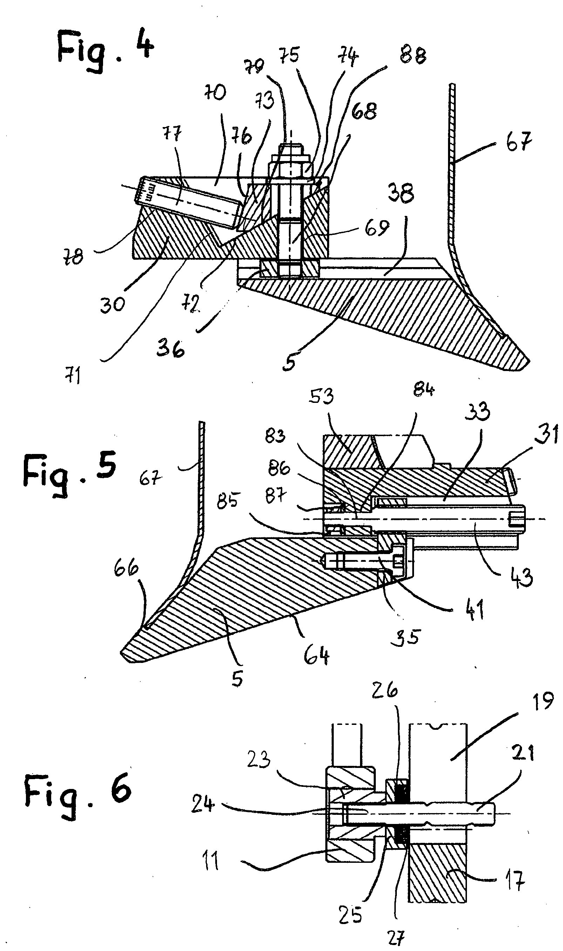

Fig. 2 zeigt, dass über die Arbeitsbreite der Andruckvorrichtung 81 vor der oberen Spindel zwei Andruckelemente 5 vorgesehen sind, die sich quer zur Transportrichtung der Werkstücke erstrecken und annähernd aneinander anschließen. Zur Erzeugung einer Andruckkraft sind zwei Andruckzylinder 14, 15 vorgesehen, die an der Oberseite eines Trägers 16 der Andruckvorrichtung 81 vorgesehen sind. Der Träger 16 ist in Form einer Platte auf einem Andruckgehäuse 49 angeordnet, das zwei in vertikaler Richtung sich erstreckende Flansche 17, 18 hat, die mit jeweils einem in y-Richtung verlaufenden Schlitz 19, 20 versehen sind. Die Länge der Schlitze 19, 20 bestimmt den maximalen Verstellweg der Andruckvorrichtung 81 in y-Richtung. Durch die Schlitze 19, 20 ragen Stehbolzen 21, 22, die horizontal verlaufen und an der Absaughaube 12 befestigt sind (Fig. 2 und 6). Auf dem einen Stehbolzen 21 sitzt ein Klemmhebel 11. Auf dem anderen Stehbolzen 22 sitzt spielfrei eine selbstsichernde Mutter 82, so dass die Andruckvorrichtung 81 noch auf/ab verstellt werden kann. Der Klemmhebel 11 sitzt, wie Fig. 6 zeigt, mit einer Gewindehülse 23 auf einem Gewindeabschnitt 24 des Stehbolzens 21. Die Gewindehülse 23 ist drehfest mit dem Klemmhebel 11 verbunden und steht in Richtung auf den Flansch 17 über den Klemmhebel 11 vor. Sie liegt mit ihrer Stirnseite an einer Scheibe 25 an. Sie umgibt ein Drucklager 26, das vorzugsweise ein Axialnadellager ist, das den Stehbolzen 21 umgibt. Das Drucklager liegt an einer Klemmscheibe 27 an, die ebenfalls auf dem Stehbolzen 21 sitzt und gegen den Flansch 17 gedrückt werden kann. Die Scheibe 25 hat axialen Abstand vom Arm 17 und radialen Abstand zu der Klemmscheibe 27.

Wird der Klemmhebel 11 geschwenkt, wird er über die Gewindehülse 23 axial auf dem Stehbolzen 21 entsprechend der Gewindesteigung verschoben. Soll die Klemmung erreicht werden, wird auf diese Weise durch Schwenken des Klemmhebels 11 die Scheibe 25 in Richtung auf den Flansch 17 gedrückt. Über das Drucklager 26 wird die Klemmscheibe 27 fest gegen den Flansch 17 gedrückt, so dass er gegen Verschieben in y-Richtung gesichert ist. Da der Klemmhebel 11 ein einarmiger Hebel ist, eine ausreichende Hebellänge aufweist und die Reibkraft durch den Einsatz des Drucklagers 26 gering ist, kann eine ausreichend hohe Klemmkraft auf den Flansch 17 und damit auf die gesamte Andruckvorrichtung 81 ausgeübt werden, so dass eine zuverlässige Klemmung des Flansches 17 und damit der Andruckvorrichtung 81 in der jeweiligen y-Position sichergestellt ist.

Grundsätzlich reicht es aus, wenn zur Klemmung der Verstelleinrichtung 8 an der Absaughaube 11 in y-Richtung nur ein Klemmhebel 11 vorhanden ist. Es kann aber anstelle der Mutter 82 auf dem Stehbolzen 22 auch ein Klemmhebel vorgesehen sein, welcher in gleicher Weise ausgebildet ist wie der zuvor beschriebene Klemmhebel 11.

Die beiden Andruckelemente 5 sind in z-Richtung durch jeweils wenigstens ein Führungselement 28, 29 in ihrer Einbaulage positioniert. Die Führungselemente 28, 29 bilden Passfedern, die entweder an die Andruckelemente angefräst oder an diese angeschraubt sind und die eine exakte Ausrichtung und Verstellung der beiden Andruckelemente 5 gegenüber jeweils einer Aufnahme 30, 31 gewährleisten, die jeweils einen Träger für die Andruckelemente 5 bilden. Die Aufnahmen 30, 31 sind vorteilhaft lösbar an jeweils einem Andruckfuß 53 (Fig. 3) der Andruckvorrichtung 81 befestigt. Die Führungselemente 28, 29 sind plattenförmig ausgebildet und greifen in entsprechende Passfedernuten der Aufnahmen 32, 33 ein.

Die Andruckelemente 5 sind an der Oberseite mit Nuten 38,39 ausgebildet, die sich in x-Richtung erstrecken und in die jeweils wenigstens ein Nutenstein 36, 37 eingreift. Die Nuten 38, 39 haben T-förmigen Querschnitt. Die Nutensteine 36, 37 haben ebenfalls T-förmigen Querschnitt und liegen formschlüssig in den Nuten 38, 39. Je nach Breite der Andruckelemente 5 sind ein oder mehr Nutensteine 36, 37 bzw. Nuten 38, 39 pro Andruckelement 5 vorgesehen, die in z-Richtung mit Abstand nebeneinander liegen.

Am Andruckelement 5 ist jeweils eine Mutter 34, 35 in Form eines Flachmaterials (Klotz) mit einer Schraube 40, 41 befestigt (Fig. 2 und 5). Die Mutter 34, 35 wird von jeweils einer Stellspindel 42, 43 durchsetzt, die sich in x-Richtung erstreckt und aus den Passnuten 32, 33 der Aufnahmen 30, 31 ragt (Fig. 5). Die Muttern 34,35 sitzen jeweils mit einem Gewindeabschnitt auf den Stellspindeln 42, 43, so dass sie durch Drehen der Stellspindeln in x-Richtung verstellt werden können. Auf diese Weise lassen sich die Andruckelemente 5, die fest mit den Muttern 34, 35 verbunden sind, in x-Richtung stufenlos einstellen. Die Stellspindeln 42, 43 sind axialgesichert und drehbar in den Aufnahmen 30, 31aufgenommen und gelagert. Die Stellspindeln 42, 43 ragen mit einem vorzugsweise verjüngten Endabschnitt 83 (Fig. 5) durch jeweils eine Öffnung 84 der Aufnahmen 30, 31 in jeweils eine Vertiefung 85, über die er nicht vorsteht. Innerhalb der Vertiefung 85 sitzen auf dem Endabschnitt 83 eine Scheibe 86 und eine selbstsichernde Mutter 87. In den Öffnungen 84 der Aufnahmen 30, 31 ist die Stellspindel 42, 43 jeweils drehbar gelagert. Die Scheibe 86 liegt am Boden der Vertiefung 85 an. Durch die beschriebene Ausbildung wird die formschlüssige Sicherung des Andruckelements 5 bewirkt, so dass dieses nicht in das Werkzeug 2 geschoben werden kann.

Die Andruckzylinder 14, 15 und ihr Zusammenspiel mit dem Andruckfuß 53 sind gleich. Im Folgenden wird darum nur anhand des Andruckzylinders 15 diese Ausbildung beschrieben. Der Andruckzylinder 15 hat einen Kolben 44, dessen Kolbenstange 45 an der Stirnseite eines Stößels 46 anliegt (Fig. 3). Er ragt mit Spiel durch eine Öffnung 47 einer Decke 48 des Andruckgehäuses 49.

Auf dem Stößel 46 sitzt außerhalb des Andruckgehäuses 49 eine Nutmutter 50, die auf das aus dem Andruckgehäuse 49 ragende Ende des Stößels 46 geschraubt ist. Die Nutmutter 50 ist mit einer Kontermutter 51, die ebenfalls eine Nutmutter ist, gekontert, die ebenfalls auf das über das Andruckgehäuse 49 ragende Ende des Stößels 46 geschraubt ist. Die Nutmutter 50 liegt in der Grundstellung auf einer Dämpfungsscheibe 52 auf, die ebenfalls auf dem Stößel 46 sitzt und an der Außenseite der Decke 48 des Andruckgehäuses 49 anliegt.

Ein Blech 16', welches am Träger 16, auf dem die beiden Andruckzylinder 14, 15 sitzen, befestigt ist, deckt den Bereich, in dem sich der Stößel 46 über die Decke 48 des Andruckgehäuses 49 erstreckt, nach außen ab.

Innerhalb des Andruckgehäuses 49 ist der Stößel 46 mit dem Andruckfuß 53 fest verbunden. An seinem unteren Ende ist die Aufnahme 31 befestigt. Ist der Andruckzylinder 15 nicht eingeschaltet, d.h. drucklos, liegt der Andruckfuß 53 mit dem Andruckelement 5 unter Schwerkraft auf dem Werkstück 3 auf. Der Andruckzylinder 15 sorgt durch eine Kraftwirkung seiner Kolbenstange 45 auf den Stößel 46 für einen zusätzlichen Anpressdruck der Andruckelemente 5 auf das Werkstück 3, wenn er auf der Kolbenseite (Richtung zum Ausfahren der Kolbenstange) druckbeaufschlagt wird. Anstelle des Andruckzylinders 15 kann auch eine Druckfeder zum Einsatz kommen.

Der Bewegungsweg der Anschlagelemente 5 in y-Richtung nach unten wird durch den Stößel 46 mit der Dämpfungsscheibe 52 begrenzt. Mit der Nutmutter 50 kann der Hub des Stößels 46 und der Dämpfungsscheibe 52 eingestellt werden. Diese Anschlagstellung wird dadurch erreicht, dass die Dämpfungsscheibe 52 an der Decke 48 des Andruckgehäuses 49 zur Anlage kommt.

Der Bewegungsweg der Anschlagelemente 5 in y-Richtung nach unten kann auch durch einen Anschlag 54 begrenzt werden, der durch einen Teil des Andruckgehäuses 49 gebildet wird. Benachbart zum unteren Ende des Stößels 46 ist der Andruckfuß 53 über ein laschenförmiges Gelenkstück 55 mit dem Andruckgehäuse 49 schwenkbar verbunden. Das Gelenkstück 45 ist mit zwei parallel zueinander liegenden, in z-Richtung verlaufenden Bolzen 56, 57 mit dem Andruckfuß 53 und dem Andruckgehäuse 49 verbunden. Der Andruckfuß 53 und das Andruckgehäuse 49 sind jeweils mit einem Schlitz 58, 59 versehen, in die das Gelenkstück 55 ragt.

Vom Gelenkstück 55 steht eine Anschlagnase 60 ab, die in der unteren Ausgangsposition der Andruckelemente 5 am Anschlag 54 des Andruckgehäuses 49 anliegt. Der Anschlag 54 wird durch die Innenseite des Andruckgehäuses 49 im Bereich des Schlitzes 59 gebildet.

Wird der Bewegungsweg der Anschlagelemente 5 in y-Richtung nach unten durch die Hubbegrenzung des Stößels 46 erreicht, dann liegt die Anschlagnase 60 noch nicht am Anschlag 54 an.

Der Andruckfuß 53 ist mit einem weiteren Gelenkstück 61 gelenkig mit dem Andruckgehäuse 49 verbunden. Das Gelenkstück 61 ist ähnlich wie das Gelenkstück 55 laschenförmig ausgebildet und über zwei parallel zueinander liegende Bolzen 62, 63 gelenkig mit dem Andruckfuß 53 und dem Andruckgehäuse 49 verbunden. Die beiden Gelenkstücke 55, 61 liegen mit Abstand übereinander und bilden eine Parallelgetriebe-Kinematik, mit der sichergestellt ist, dass der Andruckfuß 53 zuverlässig gegenüber dem Andruckgehäuse 49 verschwenkt wird.

Fig. 3 zeigt das Andruckelement 5 in der Ausgangsposition, in der die Hubbegrenzung des Stößels 46 wirkt. Der Stößel 46 liegt in dieser Ausgangsposition des Andruckelementes 5 mittels der Nutmuttern 50, 51 unter Zwischenlage der Dämpfungsscheibe 52 unter Gewichtskraft und ggf. der Zylinderkraft an der Decke 48 des Andruckgehäuses 49 an und bildet dadurch den Anschlag für das Andruckelement 5 in dessen Ausgangsposition. Sobald das zu bearbeitende Werkstück 3 in Transportrichtung x zugeführt wird, läuft es auf die schräg liegende Unterseite 64 der Andruckelemente 5 auf und hebt sie dadurch an. Hierbei verschwenkt der Andruckfuß 53 mittels der Gelenkstücke 55, 61 relativ zum Andruckgehäuse 49. Die Andruckelemente 5 liegen zumindest unter Gewichtskraft auf dem Werkstück 3 auf. Durch Druckbeaufschlagung des Kolbens 44 der Andruckzylinder 14, 15 wird eine zusätzliche Andruckkraft auf das Werkstück 3 ausgeübt. Beim Anheben der Andruckelemente 5 durch das Werkstück 3 wird der Stößel 46 gegen die Zylinderkraft nach oben verschoben. Sobald das Werkstück 3 an den Andruckelementen 5 vorbeibewegt worden ist, fallen diese unter Gewichtskraft und ggf. unter Wirkung der Zylinderkraft wieder nach unten. Hierbei verhindert die Dämpfungsscheibe 52 einen harten und lauten Aufschlag der Nutmutter 50 auf der Decke 48 des Andruckgehäuses 49 oder der Anschlagnase 60 am Anschlag 54. Die Andruckelemente 5 gelangen somit selbsttätig unter ihrer Gewichtskraft nach unten in die in Fig. 3 dargestellte Ausgangslage.

Der Andruckfuß 53 und damit das Andruckelement 5 führen beim Anheben durch das Werkstück 3 eine Schwenkbewegung aus, die in Fig. 3 durch den Pfeil 65 gekennzeichnet ist. Die beiden Gelenkstücke 55, 61 schwenken hierbei um die Achsen der Bolzen 57, 63. Außerdem schwenken die Gelenkstücke 55, 61 um die Bolzen 56, 62 relativ zum Andruckfuß 53. Durch die Einbaulage der Gelenkstücke 55, 61 und die Parallelkinematik schwenkt das Andruckelement 5 weg vom Werkzeug, wenn das Andruckelement 5 durch das Werkstück ausgehoben, d.h. nach oben geschwenkt wird.

An der schräg liegenden Vorderseite 66 des Andruckelementes 5 ist ein Spanleitblech 67 befestigt (Fig. 3 und 5), das sich vom Andruckelement 5 aus aufwärts mit Abstand zum Andruckfuß 53 erstreckt. Wie sich aus Fig. 1 ergibt, bewirkt das Spanleitblech 67, dass durch das Werkzeug 2 erzeugte Späne in die Absaughaube 12 geleitet werden.

Wenn die Andruckvorrichtung 81 zwei oder mehr Andruckelemente 5 aufweist, dann weist vorteilhaft jedes Andruckelement ein solches Spanleitblech 67 auf.

Im Ausführungsbeispiel hat die Andruckvorrichtung 81 die beschriebenen beiden nebeneinander liegenden Andruckelemente 5. Sie sind in der beschriebenen Weise jeweils an einem Andruckfuß 53 befestigt und über jeweils einen Stößel 46 durch den zugehörigen Andruckzylinder 14, 15 belastet. Die beiden Andruckelemente 5 können somit unabhängig voneinander wirken, so dass beispielsweise über die Breite des Werkstückes 3 eventuell vorhandene ungleiche Dicken durch unterschiedliches Hochschwenken der Andruckelemente 5 ausgeglichen werden können.

Die Andruckelemente 5 können mit Hilfe der Stellspindeln 42, 43 sehr feinfühlig stufenlos relativ zur Aufnahme 30, 31 in x-Richtung eingestellt werden. Die Stellspindeln 42 ermöglichen es, die Andruckelemente 5 stufenlos und nicht nur in vorgegebenen Schritten auf den Werkzeugflugkreis einzustellen. Die Stellspindeln 42, 43 lassen sich von der Einlaufseite der Andruckvorrichtung aus einfach erreichen, so dass die Andruckelemente 5 von der Bedienperson einfach betätigt werden können.

Die Klemmung der Andruckelemente 5 an den Aufnahmen 30, 31 erfolgt über eine Art Keilgetriebe, das anhand von Fig. 4 näher erläutert wird.

Der in die Nuten 38, 39 eingreifende Nutenstein 36, 37 sitzt am unteren Ende eines Stehbolzens 68, der sich in y-Richtung erstreckt und sich durch eine vertikale Öffnung 69 in der Aufnahme 30 erstreckt. Sie ist an ihrer vom Andruckelement 5 abgewandten Seite mit einer Vertiefung 70 versehen, die von zwei winklig zueinander liegenden Wänden 71, 72 begrenzt ist. Die beiden Wände liegen im Ausführungsbeispiel rechtwinklig zueinander, wobei die Wand 71 unter einem steileren Winkel in Bezug auf eine Vertikalebene verläuft als die Wand 72. Die Öffnung 69 mündet in die Wand 72.

An der Wand 72 liegt ein Keildruckstück 73 flächig an, das mit Spiel vom Stehbolzen 68 durchsetzt wird. Auf das über das Keildruckstück 73 ragende Ende des Stehbolzens 68 ist unter Zwischenlage einer Unterlegscheibe 74 eine Mutter 75 geschraubt, die in geeigneter Weise auf dem Stehbolzen 68 gegen Lösen gesichert ist, vorzugsweise eine selbstsichernde Mutter.

Das Keildruckstück 73 hat eine gegen die Wand 71 gerichtete stirnseitige Fläche 76, an der ein Gewindestift 77 anliegt. Die Achse des Gewindestiftes 77 liegt senkrecht zur Fläche 76. Der Gewindestift 77 ist in einer Gewindebohrung 78 untergebracht, die in die Wand 71 mündet. Der Gewindestift 77steht vorteilhaft aus der Aufnahme 30 vor, so dass er vom Bediener der Andruckvorrichtung einfach betätigt werden kann.

Das Keildruckstück 73 liegt mit einer Keilfläche 79 flächig an der Wand 72 und mit einer anderen Keilfläche 88 an der Unterlegscheibe 74 an. Die Keilflächen 79 und 88 schließen einen spitzen Winkel ein. Darum wird eine sehr hohe Klemmwirkung erreicht, wenn das Keildruckstück 73 mittels des Gewindestiftes 77 nach vorne bewegt wird. Dabei stützt sich die eine Keilfläche 79 gegen die Wand 72 ab und die zweite Keilfläche 88 bewirkt über die Unterlegscheibe 74 und die Mutter 75 eine aufwärts gerichtete Bewegung und Belastung des Gewindestiftes 77. In Verbindung mit dem Nutenstein 36 wird somit das Andruckelement 5 fest gegen die Aufnahme 30 gezogen und somit sicher geklemmt bzw. gespannt. Die Größe der Klemmkraft wird unter anderem von dem Winkel der Keilflächen 79 und 88 bestimmt. Die Klemmkraft ist umso größer, je kleiner dieser Winkel ist. Jedoch darf er einen bestimmten Wert nicht unterschreiten, da sonst eine Selbsthemmung des Keildruckstückes 73 eintritt. Die Klemmung des Andruckelementes 5 würde sich in diesem Fall trotz Lösen des Gewindestiftes 77 nicht mehr selbsttätig lösen.

Der Gewindestift 77 ist von der Einlaufseite der Andruckvorrichtung aus von der Bedienperson bequem zugänglich, so dass die Klemmung der Andruckelemente 5 an den Aufnahmen 30, 31 einfach möglich ist.

Die Andruckelemente 5 werden wie beschrieben in x-Richtung in einer exakt horizontalen Ebene verstellt. Das vertikale Maß ändert sich dadurch nicht, so dass eine Nachstellung in vertikaler Richtung nach Verstellen des Andruckelementes 5 in x-Richtung nicht erforderlich ist. Auf diese Weise ist eine rasche und einfache Einstellung der Andruckelemente 5 gewährleistet.

Durch die Verstellung in der horizontalen Ebene ohne Beeinflussung der vertikalen Position ergibt sich der besondere Vorteil, dass die beiden nebeneinander liegenden Andruckelemente 5 unterschiedliche Positionen in x-Richtung haben können. Bei Profilierungs- bzw. Kehlbearbeitungen können somit die beiden Andruckelemente 5 bei über die Länge der Werkzeuge unterschiedlichen Flugkreisdurchmessern optimal nahe an die jeweiligen Flugkreisdurchmesser eingestellt werden.

Mit der Verstelleinrichtung 8 wird das Andruckgehäuse 49 in y-Richtung verstellt. Die Verstelleinrichtung 8 (Fig. 1) hat eine Gewindespindel 89, auf deren oberem Ende eine Kurbel 90 sitzt, mit der die Gewindespindel 89 um ihre Achse gedreht werden kann. Die Gewindespindel 89 mit der Kurbel 90 sowie einem Anzeigegerät 91 sind an der Absaughaube 12 befestigt. Die Gewindespindel 89 wirkt mit einem Gewinde zusammen, welches Teil des Andruckgehäuses 49 ist. Wird darum die Gewindespindel 89 um ihre Achse gedreht, wird das Andruckgehäuse 49 in y-Richtung verstellt, wenn deren Klemmung mit Hilfe des Klemmhebels 11 aufgehoben ist.

An Stelle der beschriebenen Andruckvorrichtung 80 nach der oberen Spindel kann auch eine Andruckvorrichtung in einer konstruktiv ähnlichen Ausbildung wie die Andruckvorrichtung 81 nach der oberen Spindel vorgesehen sein. Ebenso kann eine solche Andruckvorrichtung 81 nicht nur bei oberen Spindeln Einsatz finden, sondern auch bei anderen Spindeln, zum Beispiel bei einer Universalspindel, die sowohl als Horizontalspindel als auch als Vertikalspindel als auch als schräg liegende Spindel eingesetzt werden kann.

## Patentansprüche

1. Andruckvorrichtung für eine Werkzeugmaschine zur Bearbeitung von Werkstücken aus Holz, Kunststoff und dergleichen, insbesondere Kehlmaschine, mit mindestens einem Andruckelement (5), das an wenigstens einem Träger (30, 31) befestigt und über wenigstens eine Keilklemmeinrichtung (72, 73, 77) am Träger (30, 31) klemmbar ist, die mindestens ein Stellelement (77) aufweist, das an mindestens einem Keildruckstück (73) angreift, das mit einer Keilfläche (79) an einer Gegenkeilfläche (72) des Trägers (30, 31) anliegt,
**dadurch gekennzeichnet, dass** das Keildruckstück (73) von einem Stehbolzen (68) mit radialem Spiel durchsetzt ist.

2. Andruckvorrichtung nach Anspruch 1,
**dadurch gekennzeichnet, dass** das Keildruckstück (73) ein auf dem Stehbolzen (68) gehaltenes Befestigungselement (75) belastet.

3. Andruckvorrichtung nach Anspruch 2,
**dadurch gekennzeichnet, dass** das Keildruckstück (73) zwei spitzwinklig zueinander liegende Keilflächen (79, 88) aufweist, von denen die eine Keilfläche (79) flächig an der Gegenkeilfläche (72) des Trägers (30, 31) anliegt und die andere Keilfläche (88) auf das Befestigungselement (75) wirkt.

4. Andruckvorrichtung nach einem der Ansprüche 1 bis 3,
**dadurch gekennzeichnet, dass** das Stellelement (77) an einer Anlagefläche (76) des Keildruckstückes angreift, die winklig zur Keilfläche (79) des Keildruckstückes (73) verläuft, und dass das Stellelement (77) vorteilhaft eine Stellspindel ist, die in eine Gewindebohrung (78) des Trägers (30, 31) geschraubt ist.

5. Andruckvorrichtung nach einem der Ansprüche 1 bis 4,
**dadurch gekennzeichnet, dass** die Gegenkeilfläche (72) der Boden einer Vertiefung (70) des Trägers (30, 31) ist.

6. Andruckvorrichtung nach einem der Ansprüche 1 bis 5,
**dadurch gekennzeichnet, dass** der Stehbolzen (68) mit einem Nutenstein (36) fest verbunden ist, der in einer vorteilhaft als T-Nut ausgebildeten Nut (38, 39) des Andruckelementes (5) liegt.

7. Andruckvorrichtung nach einem der Ansprüche 1 bis 6, **dadurch gekennzeichnet, dass** das wenigstens eine Andruckelement (5) mit wenigstens einer Stellspindel (43) relativ zum wenigstens einen Träger (30, 31) in einer Horizontalebene (x-Richtung) verstellbar ist.

8. Andruckvorrichtung nach einem der Ansprüche 1 bis 7, die in vertikaler Richtung (y-Achse) verstellbar und vorteilhaft mittels wenigstens eines Klemmhebels (11) in der jeweiligen y-Position klemmbar ist,
**dadurch gekennzeichnet, dass** der Klemmhebel (11) in der Klemmstellung die Andruckvorrichtung (81) gegen eine Absaughaube (12) über wenigstens ein Axialdrucklager (26) spannt, das vorteilhaft einen Stehbolzen (21) umgibt, dessen eines Ende an der Absaughaube (12) befestigt ist und auf dessen anderes Ende der Klemmhebel (11) geschraubt ist.

9. Andruckvorrichtung nach einem der Ansprüche 1 bis 8,
**dadurch gekennzeichnet, dass** der Träger (30, 31) mit mindestens einem Andruckfuß (53) verbunden ist, der gelenkig mit einem Andruckgehäuse (49) verbunden ist.

10. Andruckvorrichtung nach einem der Ansprüche 1 bis 9,
**dadurch gekennzeichnet, dass** das Andruckelement (5) unter Gewichtskraft in einer anschlagbegrenzten Ausgangsposition liegt.

11. Andruckvorrichtung nach Anspruch 9 oder 10,
**dadurch gekennzeichnet, dass** der Andruckfuß (53) an seinem vom Andruckelement (5) abgewandten Ende mit wenigstens einem Stößel (46) verbunden ist.

12. Andruckvorrichtung nach Anspruch 11,
**dadurch gekennzeichnet, dass** der Stößel (46) in der Ausgangsposition des Andruckelementes (5) mittels wenigstens eines Anschlages (50, 51) unter Zwischenlage wenigstens eines Dämpfungselementes (52) am Andruckgehäuse (49) anliegt und dadurch den Anschlag für das Andruckelement (5) in dessen Ausgangsposition bildet.

13. Werkzeugmaschine, insbesondere Kehlmaschine, mit wenigstens einer Andruckvorrichtung nach einem der Ansprüche 1 bis 12.

14. Werkzeugmaschine nach Anspruch 13,
**dadurch gekennzeichnet, dass** die Werkzeugmaschine mindestens eine horizontale Spindel (1) aufweist, die im Bereich oberhalb einer Transportbahn (6) für die Werkstücke (3) liegt und auf der ein Werkzeug (2) drehfest sitzt.

15. Werkzeugmaschine nach Anspruch 14,
**dadurch gekennzeichnet, dass** das Andruckelement (5) in Transportrichtung des Werkstückes (3) vor der Spindel (1) angeordnet ist und vorteilhaft im Transportweg des Werkstückes (3) liegt und durch das Werkstück (3) beim Durchlauf durch die Werkzeugmaschine anhebbar ist.

## Claims

1. Pressing device for a machine tool for machining workpieces made from wood, plastic and the like, particularly a moulding machine, having at least one pressing element (5), which is fastened on at least one support (30, 31) and can be clamped on the support (30, 31) by means of at least one wedge-shaped clamping device (72, 73, 77), which has at least one adjusting element (77), which acts on at least one wedge-shaped thrust piece (73), a wedge-shaped surface (79) of which bears against a mating wedge-shaped surface (72) of the support (30, 31),
**characterized in that** the wedge-shaped thrust piece (73) is penetrated by a stud bolt (68) with radial play.

2. Pressing device according to Claim 1,
**characterized in that** the wedge-shaped thrust piece (73) loads a fastening element (75) held on the stud bolt (68).

3. Pressing device according to Claim 2,
**characterized in that** the wedge-shaped thrust piece (73) has two wedge-shaped surfaces (79, 88) lying at an acute angle to one another, of which the one wedge-shaped surface (79) bears flat against the mating wedge-shaped surface (72) of the support (30, 31) and the other wedge-shaped surface (88) acts on the fastening element (75).

4. Pressing device according to one of Claims 1 to 3,
**characterized in that** the adjusting element (77) acts on a bearing surface (76) of the wedge-shaped thrust piece, which runs at an angle to the wedge-shaped surface (79) of the wedge-shaped thrust piece (73), and **in that** the adjusting element (77) is advantageously an adjusting spindle, which is screwed into a threaded hole (78) of the support (30, 31).

5. Pressing device according to one of Claims 1 to 4,
**characterized in that** the mating wedge-shaped surface (72) is the base of a depression (70) of the support (30, 31).

6. Pressing device according to one of Claims 1 to 5,
**characterized in that** the stud bolt (68) is securely connected to a slot nut (36), which lies in a groove (38, 39) of the pressing element (5), which is advantageously constructed as a T-slot.

7. Pressing device according to one of Claims 1 to 6,
**characterized in that** the at least one pressing element (5) can be adjusted in a horizontal plane (x direction) relatively to the at least one support (30, 31) using at least one adjusting spindle (43).

8. Pressing device according to one of Claims 1 to 7, which can be adjusted in the vertical direction (y axis) and can advantageously be clamped in the respective y position by means of at least one clamping lever (11),
**characterized in that** the clamping lever (11) clamps the pressing device (81) in the clamping position against an suction hood (12) by means of at least one axial-thrust bearing (26), which preferably surrounds a stud bolt (21), the one end of which is fastened on the suction hood (12) and on the other end of which the clamping lever (11) is screwed.

9. Pressing device according to one of Claims 1 to 8,
**characterized in that** the support (30, 31) is connected to at least one pressing base (53), which is connected in an articulated manner to a pressing housing (49).

10. Pressing device according to one of Claims 1 to 9,
**characterized in that** the pressing element (5) lies in an initial position limited by a stop under the force of gravity.

11. Pressing device according to Claim 9 or 10,
**characterized in that** the pressing base (53) is connected at its end facing away from the pressing element (5) to at least one plunger (46).

12. Pressing device according to Claim 11,
**characterized in that**, in the initial position of the pressing element (5), the plunger (46) bears by means of at least one stop (50, 51), with the interposition of at least one damping element (52), against the pressing housing (49) and as a result forms the stop for the pressing element (5) in the initial position thereof.

13. Machine tool, particularly moulding machine, having at least one pressing device according to one of Claims 1 to 12.

14. Machine tool according to Claim 13,
**characterized in that** the machine tool has at least one horizontal spindle (1), which lies in the region above a transport track (6) for the workpieces (3) and on which a tool (2) sits in a rotationally fixed manner.

15. Machine tool according to Claim 14,
**characterized in that** the pressing element (5) is arranged upstream of the spindle (1) in the transport direction of the workpiece (3) and advantageously lies in the transport path of the workpiece (3) and can be lifted by the workpiece (3) during passage through the machine tool.

## Revendications

1. Dispositif de compression pour une machine-outil servant à l'usinage de pièces en bois, en matière plastique et similaire, notamment pour une moulurière, comportant au moins un élément de compression (5), qui est fixé sur au moins un support (30, 31) et qui est susceptible d'être serré sur le support (30, 31) par l'intermédiaire d'au moins un dispositif d'ancrage cunéiforme (72, 73, 77) qui comporte au moins un élément de réglage (77) qui s'engage sur au moins une pièce de pression cunéiforme (73), qui par une surface cunéiforme (79) s'appuie sur au moins une surface antagoniste cunéiforme (72) du support (30, 31), **caractérisé en ce que** la pièce de pression cunéiforme (73) est traversée par un goujon (68) faisant preuve d'un jeu radial.

2. Dispositif de compression selon la revendication 1,
**caractérisé en ce que** la pièce de pression cunéiforme (73) contraint un élément de fixation (75) maintenu sur le goujon (68).

3. Dispositif de compression selon la revendication 2,
**caractérisé en ce que** la pièce de pression cunéiforme (73) comporte deux surfaces cunéiformes (79, 88) placées à angle aigu l'une par rapport à l'autre, dont l'une surface cunéiforme (79) s'appuie à pleine surface sur la surface antagoniste cunéiforme (72) du support (30, 31) et dont l'autre surface cunéiforme (88) agit sur l'élément de fixation (75).

4. Dispositif de compression selon l'une quelconque des revendications 1 à 3,
**caractérisé en ce que** l'élément de réglage (77) s'engage sur une surface d'appui (76) de la pièce de pression cunéiforme, qui s'écoule avec un angle par rapport à la surface cunéiforme (79) de la pièce de pression cunéiforme (73) et **en ce que** l'élément de réglage (77) est avantageusement une broche de réglage qui est vissée dans un taraudage (78) du support (30, 31).

5. Dispositif de compression selon l'une quelconque des revendications 1 à 4,
**caractérisé en ce que** la surface antagoniste cunéiforme (72) est le fond inférieur d'un creux (70) du support (30, 31) .

6. Dispositif de compression selon l'une quelconque des revendications 1 à 5, **caractérisé en ce que** le goujon (68) est fixement relié avec une clavette (36) qui se situe dans une rainure (38, 39) avantageusement conçue sous la forme d'une rainure en forme de T de l'élément de compression (5).

7. Dispositif de compression selon l'une quelconque des revendications 1 à 6,
**caractérisé en ce que** l'au moins un élément de compression (5) est réglable à l'aide d'au moins une broche de réglage (43) par rapport à l'au moins un support (30, 31) dans un plan horizontal (la direction X).

8. Dispositif de compression selon l'une quelconque des revendications 1 à 7, qui est réglable dans la direction verticale (l'axe Y) et qui est susceptible d'être serré avantageusement à l'aide d'au moins un levier de serrage (11) dans la position Y respective,
**caractérisé en ce que** dans la position de serrage, le levier de serrage (11) serre le dispositif de compression (81) contre une hotte aspirante (12) par l'intermédiaire d'au moins un palier de pression radiale (26) qui entoure avantageusement un goujon (21) dont l'une extrémité est fixée sur la hotte aspirante (12) et sur l'autre extrémité duquel est vissé le levier de serrage (11) .

9. Dispositif de compression selon l'une quelconque des revendications 1 à 8,
**caractérisé en ce que** le support (30, 31) est relié avec au moins un pied presseur (53) qui est relié de manière articulée avec au moins un boîtier presseur (49).

10. Dispositif de compression selon l'une quelconque des revendications 1 à 9,
**caractérisé en ce que** l'élément de compression (5) se trouve sous l'effet de la pesanteur dans une position de départ limitée par butée.

11. Dispositif de compression selon la revendication 9 ou 10,
**caractérisé en ce que** sur son extrémité opposée à l'élément de compression (5), le pied presseur (53) est relié avec au moins un coulisseau (46).

12. Dispositif de compression selon la revendication 11,
**caractérisé en ce que** dans la position de départ de l'élément de compression (5), le coulisseau (46) s'appuie par au moins une butée (50, 51) sous intercalage d'au moins un élément amortisseur (52) sur le boîtier presseur (49) et forme ainsi la butée pour l'élément de compression (5) dans la position de départ de celui-ci.

13. Machine-outil, notamment moulurière, pourvue d'au moins un dispositif de compression selon l'une quelconque des revendications 1 à 12.

14. Machine-outil selon la revendication 13,
**caractérisée en ce que** la machine-outil comporte au moins une broche (1) horizontale, qui se situe dans la zone au-dessus d'une trajectoire de transport (6) des pièces (3) et sur laquelle un outil (2) est placé de manière solidaire en rotation.

15. Machine-outil selon la revendication 14,
**caractérisée en ce que** dans la direction de transport de la pièce (3), l'élément de compression (5) est placé à l'avant de la broche (1) et se situe avantageusement dans la voie de transport de la pièce (3) et est susceptible d'être relevé par la pièce (3) lors du passage à travers la machine-outil.
